# EUROPÄISCHE PATENTSCHRIFT

(11) **EP 2 831 405 B1**
(45) Veröffentlichungstag und Bekanntmachung des Hinweises auf die Patenterteilung: **11.04.2018**
(21) Anmeldenummer: 13703449.2
(22) Anmeldetag: 12.02.2013
(51) Int. Cl.: F02M 55/02, F02M 61/14

(54) **HALTER ZUR BEFESTIGUNG EINER KOMPONENTE AN EINER BRENNKRAFTMASCHINE, LAGERBUCHSE FÜR SOLCH EINEN HALTER UND BRENNSTOFFEINSPRITZANLAGE**
RETAINER FOR FASTENING A COMPONENT TO AN INTERNAL COMBUSTION ENGINE, BEARING BUSH FOR SUCH A RETAINER, AND FUEL INJECTION SYSTEM
SUPPORT DE FIXATION D'UN COMPOSANT SUR UN MOTEUR À COMBUSTION INTERNE, BAGUE DE PALIER POUR UN TEL SUPPORT ET SYSTÈME D'INJECTION DE CARBURANT

(30) Priorität: 27.03.2012 DE 102012204845
(43) Veröffentlichungstag der Anmeldung: 04.02.2015
(73) Patentinhaber: Robert Bosch GmbH, 70442 Stuttgart (DE)
(72) Erfinder: REHWALD, Andreas, 74321 Bietigheim-Bissingen (DE); MAESS, Matthias, 71034 Boeblingen (DE); GUENGOER, Goekhan, 71735 Eberdingen (DE)
(86) Internationale Anmeldenummer: PCT/EP2013/052771
(87) Internationale Veröffentlichungsnummer: WO 2013/143749

(56) Entgegenhaltungen:
- EP-A1- 0 065 581
- EP-A1- 1 464 824
- EP-A1- 2 333 301
- EP-A2- 1 167 166
- DE-A1-102005 008 038
- US-A- 5 809 974
- US-A- 6 059 503
- US-A1- 2011 073 074

## Beschreibung

### Stand der Technik

Die Erfindung betrifft einen Halter zur Befestigung zumindest einer Komponente, insbesondere eines Brennstoffverteilers, an einer Brennkraftmaschine. Speziell betrifft die Erfindung das Gebiet der Brennstoffeinspritzanlagen von Brennkraftmaschinen.

Aus der US 7,682,117 B2 ist ein isolierender Halter zur Verbindung einer Brennstoffverteilerleiste einer Brennstoffeinspritzanlage zur direkten Einspritzung von Brennstoff mit einer Brennkraftmaschine bekannt. Hierbei sind einander zugewandte, als Vorspannungsbegrenzer dienende Spannelemente vorgesehen, denen jeweils ein Dämpfungsring aus einem Elastomer zugeordnet ist. Über einen zwischen den Spannelementen vorgesehenen Spalt ist der axiale Vorspannweg bei der Befestigung begrenzt.

Bei dem aus der US 7,682,117 B2 bekannten Halter können somit zwei ringförmige Elastomerbauteile zur Dämpfung in Kombination mit zwei Metallhülsen zum Einsatz kommen, wobei die Vorspannung begrenzt ist. Die Begrenzung ist hierbei über den definierten Spalt einstellbar. Bei der Verschraubung wird der Spalt überbrückt und die ringförmigen Elastomerbauteile werden vorgespannt. Über die axiale Steifigkeit und über die vorgegebene Spalthöhe kann die Klemmkraft beziehungsweise die Vorspannung der Elastomerbauteile eingestellt werden. Sobald die Metallhülsen auf Block gehen, wird die zusätzliche Schraubenvorspannung nicht mehr in die Elastomerbauteile eingeführt, sondern in die Metallbauteile. Dadurch werden die Elastomerbauteile vor Überdehnung und vor Versagen bei zu hohen Anzugsmomenten geschützt.

Das aus der US 7,682,117 B2 bekannte Funktionsprinzip zur Trennung von Vorspannung und Schraubenvorspannkraft hat allerdings mehrere Nachteile. Die Elastomerbauteile sehen konzeptbedingt eine hohe Vorspannung beziehungsweise Vordehnung, um die axiale Mindestklemmkraft sicherzustellen. Dies hat bereits eine wesentliche Vorbelastung der Elastomerbauteile nach der Montage zur Folge. Auf Grund der Einzelteiltoleranzen, insbesondere Höhenmaße, der Elastomerbauteile und der Metallhülsen stellen sich außerdem toleranzbedingte Streuungen der Vordehnungen in den Elastomerbauteilen ein. Vor allem dünne Elastomerbauteile sind hierbei sehr sensibel bezüglich dieser Toleranzkette, wodurch ein Auslegungsspielraum verloren geht. Die toleranzbedingt am stärksten vorgespannten Maximum-Grenzmuster sind besonders rissgefährdet, während die entsprechenden Minimum-Grenzmuster eine geringe Klemmkraft bezüglich der Brennkraftmaschine zur Folge haben. Ebensowenig ist es möglich, beliebig nachgiebige Elastomerbauteile zu verwenden, da diese höhere quasi-statische Verschiebungen des Brennstoffverteilers und der Einspritzventile bezüglich der Einleitung von Betriebskräften zur Folge haben, was wiederum zu erhöhtem Verschleiß an den Dichtungen der Einspritzventile führen würde. Als weiterer Nachteil kann sich das Elastomermaterial an den Grenzschichten zwischen den Elastomerbauteilen und den Metallhülsen tangential zur starren Metalloberfläche bewegen. Dieser Effekt führt zu einer starken Abrasion des Elastomers an den Kontaktflächen und damit zu einem hohen Ausfallrisiko der Elastomerbauteile. EP 0 065 581 A1 offenbart einen vibrationsdämpfenden Halter für eine Fahrerkabine eines Mähdreschers.

DE 10 2005 008038 A1 offenbart einen vibrationsdämpfenden Halter für einen Brennstoffverteiler einer Brennstoffeinspritzanlage.

### Offenbarung der Erfindung

Die erfindungsgemäße Brennstoffeinspritzanlage mit Brennstoffverteiler und Halter mit den Merkmalen des Anspruchs 1 hat den Vorteil, dass eine verbesserte Schwingungsdämpfung über die Lebensdauer gewährleistet ist. Speziell können die dargestellten Nachteile des Standes der Technik vermieden werden. Hierbei kann in vorteilhafter Weise eine schwingungstechnische Entkoppelung zwischen der Komponente, insbesondere des Brennstoffverteilers, und der Brennkraftmaschine gewährleistet werden. Hierdurch können Geräuschemissionen verringert werden.

Durch die in den Unteransprüchen aufgeführten Maßnahmen sind vorteilhafte Weiterbildungen der im Anspruch 1 angegebenen Brennstoffeinspritzanlage mit Brennstoffverteiler und Halter möglich.

Ein vorteilhafter Einsatzbereich besteht für gemischverdichtende, fremdgezündete Brennkraftmaschinen. Ein bevorzugter Anwendungsbereich besteht für die Benzindirekteinspritzung. Hierbei kann der Brennstoffverteiler als Brennstoffverteilerleiste ausgestaltet sein. Der Brennstoffverteiler dient als gemeinsamer Brennstoffspeicher für mehrere Hochdruck-Einspritzventile. Die mit dem Brennstoffverteiler verbundenen Einspritzventile spritzen im Betrieb den zum Verbrennungsvorgang erforderlichen Brennstoff unter hohem Druck in Brennräume der Brennkraftmaschine ein. Der Brennstoff wird hierfür zuvor über eine Hochdruckpumpe verdichtet und mengengesteuert über eine Hochdruckleitung in den Brennstoffverteiler gefördert. Im Betrieb ergibt sich das Problem, dass der Brennstoffverteiler zu Schwingungen im hörbaren Frequenzbereich angeregt werden kann. Dies geschieht vor allem durch Geräuschquellen in den Einspritzventilen, die Bestandteil einer Brennstoffeinspritzanlage sind. Der Körperschall breitet sich hierbei beispielsweise von den Einspritzventilen über Railtassen, den Brennstoffverteiler und Halter auf die Anbaustruktur aus, von wo störende Geräusche abgestrahlt werden, die unter Umständen sogar bis ins Innere des Fahrzeugs gelangen können. Die Anbaustruktur ist in der Regel der Zylinderkopf der Brennkraftmaschine. Hierbei ist jedoch auch eine Anbindung des Brennstoffverteilers über Distanzhülsen oder über weitere Verbindungselemente möglich. Die Erzeugung von Schwingungen im hörbaren Frequenzbereich kann in vorteilhafter Weise durch die erfindungsgemäße Lagerbuchse vermieden oder zumindest verringert werden. Hierbei kann über die Lebensdauer eine zuverlässige Reduktion der Körperschallübertragung gewährleistet werden. Speziell ins Innere des Fahrzeugs dringende Geräusche können somit vermieden werden.

In vorteilhafter Weise kann die Lagerbuchse als Bauteil ausgestaltet sein, bei dem die Einzelteile miteinander verbunden sind. Dies vereinfacht die Handhabung und die Montage. Außerdem ergibt sich dadurch bauartbedingt eine definierte Positionierung des inneren Buchsenteils, des äußeren Buchsenteils und des Dämpfungselements zueinander. Diese Ausgestaltung ermöglicht auch vorteilhafte Verbindungen der Lagerbuchse mit dem Haltekörper des Halters.

Das innere Buchsenteil und das äußere Buchsenteil können in vorteilhafter Weise aus zwei ineinander liegenden Metallhülsen hergestellt sein, die in eine Form eingelegt werden. Anschließend kann ein Kunststoff, insbesondere ein Elastomerkunststoff, in die Form eingeleitet werden, so dass ein Zwischenraum zwischen dem inneren Buchsenteil und dem äußeren Buchsenteil ausgefüllt wird. Durch besondere Fertigungsverfahren, wie z.B. durch Vulkanisieren, kann in vorteilhafter Weise erreicht werden, dass sich der Werkstoff für das Dämpfungselement, insbesondere die Elastomerpartition, stoffschlüssig mit den Metalloberflächen verbindet. Nach der Entformung bilden die fest miteinander verbundenen Buchsenteile und das Dämpfungselement somit ein Bauteil aus den metallischen Buchsenteilen und dem Dämpfungselement. Da die Kontaktflächen zwischen den metallischen Werkstoffen und dem elastisch verformbaren Werkstoff des Dämpfungselements fest miteinander verbunden sind, weisen die Fügestellen bei dieser Ausgestaltung eine besonders hohe Verschleißfestigkeit auf. Außerdem steht das elastisch verformbare Dämpfungselement zunächst nicht unter Vorspannung. Auch im montierten Zustand muss das Dämpfungselement nicht notwendigerweise Schraubenkräfte aufnehmen, da der Kraftschluss zwischen einem Befestigungsmittel, insbesondere einer Schraube, auf die Brennkraftmaschine komplett über das innere Buchsenteil geführt werden kann.

In vorteilhafter Weise verhindert das Dämpfungselement einen metallischen Kontakt zwischen dem inneren Buchsenteil und dem äußeren Buchsenteil, so dass eine vollständige elastische Isolation zwischen der Komponente, insbesondere des Brennstoffverteilers, und der Brennkraftmaschine, gewährleistet ist. Eine isolierende Wirkung in allen räumlichen Richtungen kann dadurch erzielt werden, dass der Werkstoff für das elastisch verformbare Dämpfungselement eine hohe Materialdämpfung aufweist. Dadurch kann auch bei einer sehr kleinen Schichtdicke des Dämpfungselements, die beispielsweise im Bereich von einigen Zehntel Millimeter liegen kann, eine deutliche Isolationswirkung erzielt werden. Somit kann eine Schichtdicke des elastisch verformbaren Dämpfungselements kleiner als 1 mm vorgegeben sein.

Somit ist es vorteilhaft, dass das Dämpfungselement stoffschlüssig mit dem inneren Buchsenteil verbunden ist und dass das Dämpfungselement stoffschlüssig mit dem äußeren Buchsenteil verbunden ist. Hierbei ist es ferner vorteilhaft, dass das Dämpfungselement durch Vulkanisieren mit dem inneren Buchsenteil verbunden ist und dass das Dämpfungselement durch Vulkanisieren mit dem äußeren Buchsenteil verbunden ist. In vorteilhafter Weise kann das Dämpfungselement auf der Basis zumindest eines Elastomers oder eines Gummis ausgebildet sein. Hierbei ist eine kleine Schichtdicke des Dämpfungselements realisierbar. Erfindungsgemäß weist das äußere Buchsenteil an der durchgehenden Ausnehmung einen Absatz auf, weist das innere Buchsenteil an der durchgehenden Ausnehmung einen Absatz auf, der dem Absatz des äußeren Buchsenteils zugeordnet ist, und ist das innere Buchsenteil an dem Absatz des inneren Buchsenteils über das Dämpfungselement an dem Absatz des äußeren Buchsenteils abgestützt. Auf diese Weise kann eine vorteilhafte Kontur der das Dämpfungselement bildenden Elastomerschicht oder dergleichen vorgegeben werden. Die Kontur des Dämpfungselements kann hierbei durch den beschriebenen Herstellungsprozess definiert werden. Durch die Absätze zwischen den Buchsenteilen kann eine unzulässig hohe Relativbewegung der Buchsenteile gegeneinander unter axialer Belastung begrenzt werden, so dass eine übermäßige Scherung in dem Dämpfungselement, insbesondere der Elastomerschicht, und somit deren Versagen verhindert ist.

Vorteilhaft ist es auch, dass das innere Buchsenteil und das äußere Buchsenteil an der durchgehenden Ausnehmung aneinander angepasste Stützkonturen aufweisen. Hierdurch können zusätzlich axiale Querschnittswechsel vorgegeben werden, durch die sich die axialen Kontaktflächen zwischen den metallischen Buchsenteilen und dem als Schicht, insbesondere Elastomerschicht, ausgestalteten Dämpfungselement, in der Summe vergrößern. Hierdurch kann der Schutz des Dämpfungselements gegenüber scherenden Abrieb unter Betriebskrafteinleitung weiter erhöht werden.

Die Stützkonturen sind vorzugsweise ringförmig um eine Längsachse der Lagerbuchse ausgestaltet. Die aneinander angepassten Stützkonturen können hierbei in vorteilhafter Weise eine Nut und eine der Nut zugeordnete Rippe oder Lamelle und/oder einander zugeordnete Absätze aufweisen. Die Nut, Rippe, Lamelle oder die Absätze sind hierbei vorzugsweise ringförmig an den Buchsenteilen ausgestaltet. Hierbei können mehrere solcher Stützkonturen in Längsrichtung vorgesehen sein. Die Stützkonturen können hierbei unterschiedlich oder auch sich wiederholend ausgestaltet sein.

Zur Ausgestaltung des Halters wird die Lagerbuchse in vorteilhafter Weise mit dem Haltekörper des Halters verbunden. Hierbei ist in vorteilhafter Weise das äußere Buchsenteil der Lagerbuchse mit dem Haltekörper verbunden, wobei ein vorteilhaftes Fügekonzept zum Einsatz kommt. Hierdurch kann auf ein Hartlöten zur Verbindung verzichtet werden, bei dem das Problem besteht, das beispielsweise ein Elastomer bei einer Passage durch den Lötofen zerstört werden kann.

Vorteilhaft ist es, dass das äußere Buchsenteil der Lagerbuchse in den Haltekörper eingepresst ist. Dies hat den zusätzlichen Vorteil, dass beim Einsatz mehrerer Lagerbuchsen die Lagerbuchsen bezüglich einer Referenz eingepresst werden können oder bezüglich einer Referenz eingestellt werden können. Dadurch kann eine gute Ebenheit des Halters in Bezug zu einer Referenzebene erzielt werden. Hierdurch ergibt sich wiederum der Vorteil, dass eine gegebenenfalls auftretende zusätzliche Vorbelastung der Dämpfungselemente auf Grund der Montage bei unebenen Halterpositionen zumindest weitgehend vermieden wird. Um eine ausreichende Presslänge zu erzielen, eignet sich diese Fügeverfahren vor allem in Kombination mit massiven, insbesondere gegossenen, Buchsenteilen der Lagerbuchse.

Vorteilhaft ist es auch, dass das äußere Buchsenteil der Lagerbuchse mit dem Haltekörper verstemmt ist. Hierbei kann das äußere Buchsenteil auch eingepresst und verstemmt sein. In vorteilhafter Weise kann ein Einpressen mit nachfolgendem Verstemmen erfolgen. Dies hat den Vorteil, dass kleinere Presslängen realisierbar sind. Hierbei kann ein vorzugsweise dünnerer Halteabschnitt des Haltekörpers bis auf eine äußere Stufe auf die Lagerbuchse aufgepresst werden. Durch Aufpressen eines Stempels kann das Material im Bereich der oberen Kante plastisch über die Oberseite des Halteabschnitts des Haltekörpers hinweg verformt werden. Hierdurch ist eine zuverlässige Befestigung von Lagerbuchsen mit kleineren Presslängen möglich.

Vorteilhaft ist es ferner, dass das äußere Buchsenteil der Lagerbuchse mit dem Haltekörper über ein Schraubelement verbunden ist. Das Schraubelement kann insbesondere als Mutter ausgestaltet sein. Hierfür kann das äußere Buchsenteil der Lagerbuchse ein Außengewinde aufweisen. Zur Erhöhung der effektiven Klemmlänge ist es vorteilhaft, dass das Schraubelement, insbesondere die Mutter, eine ringförmige Nut, aufweist.

Eine weitere vorteilhafte Verbindung kann durch Laserschweißen realisiert werden. Hierbei ist es vorteilhaft, dass das äußere Buchsenteil der Lagerbuchse mit dem Haltekörper verschweißt ist. Das Laserschweißen kann auch in Kombination mit einem Verpressen erfolgen. Beim Laserschweißen wird darauf geachtet, dass der lokale Wärmeeintrag nicht zu einer Zerstörung des elastisch verformbaren Materials des Dämpfungselements führt. Im Unterschied zum Schweißen mittels eines Durchlaufofens kann beim Laserschweißen der lokale Wärmeeintrag gut begrenzt werden. Lasernähte können hierbei sowohl auf der Oberals auch auf der Unterseite ausgeführt werden. Gegebenenfalls kann eine Strichnaht verwendet werden.

Somit lassen sich zahlreiche Vorteile erzielen.

Die Geräuschübertragung von einem Brennstoffverteiler in die Anbaustruktur, insbesondere in die Brennkraftmaschine, nimmt gegenüber einer starren Verschraubung ab.

Schwingungen des Brennstoffverteilers können stärker gedämpft werden, wodurch die Schallabstrahlung von der Oberfläche des Brennstoffverteilers abnimmt.

Die Schwingungsbelastung des Brennstoffverteilers und der Hochdruck-Einspritzventile auf Grund der Schwingungsbelastung der Brennkraftmaschine nimmt ab, da auch die Schwingungsübertragung in diese Richtung gedämpft wird. Dadurch entstehen Vorteile hinsichtlich der Auslegung und Zuverlässigkeit dieser Komponenten.

Durch den Vulkanisationsprozess haftet die Elastomerschicht oder eine vergleichbare Schicht, aus der das Dämpfungselement gebildet ist, besonders gut an den metallischen Buchsenteilen. Dadurch werden tangentiale Relativbewegungen vermieden. Ferner wird das Risiko der Rissbildung an der Kontaktfläche und das Risiko einer Abrasion verringert.

Gegenüber der Verwendung von Vorspannelementen beziehungsweise Hülsen, die eine Vorspannung begrenzen, und zwischen diesen eingelegten Isolatoren ist eine Ausgestaltung möglich, bei der im montierten Zustand keine aus der Schraubenvorspannung resultierende Belastung auf das Dämpfungselement wirkt, da der Brennstoffverteiler über das äußere Buchsenteil formschlüssig mit dem Dämpfungselement verbunden ist. Dadurch ergibt sich eine besonderes verschleißfeste Ausgestaltung und es stellt sich ein wesentlich niedrigeres Ausfallrisiko dar als unter starker Vorspannung.

Gegenüber der Verwendung von Vorspannelementen und eingelegten Isolatoren kann die Anzahl der Bauteile außerdem reduziert werden.

Außerdem kann die Form des Dämpfungselements im Rahmen fertigungstechnischer Möglichkeiten beliebig ausgeführt werden.

Das elastisch verformbare Dämpfungselement ist in vorteilhafter Weise aus einem Gummi gebildet. Der Begriff des Gummis ist hierbei allgemein zu verstehen. Unter dem Begriff des Gummis sind sowohl ein Naturkautschuk als auch synthetische Varianten zu verstehen. Möglich ist auch die Ausgestaltung des Dämpfungselements aus einem Polymerwerkstoff. Hierbei kommen insbesondere thermoplastische Elastomere in Frage. Möglich ist auch der Einsatz von reinen Thermoplasten. Wenn das Dämpfungselement aus einem reinen Thermoplast hergestellt ist, dann ergeben sich zwar schlechte Dämpfungseigenschaften, dafür aber eine bessere Haltbarkeit und somit Dauerbeständigkeit.

Eine stoffschlüssige Verbindung zwischen den metallischen Buchsenteilen und dem elastisch verformbaren Dämpfungselement durch Vulkanisieren ist bei einer Ausgestaltung aus Gummi in vorteilhafter Weise möglich.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 einen Halter mit einer Lagerbuchse zur Befestigung einer Komponente an einer Brennkraftmaschine in einer auszugsweisen, schematischen Schnittdarstellung entsprechend einem ersten Ausführungsbeispiel der Erfindung;
Fig. 2 eine Lagerbuchse in einer auszugsweisen, schematischen Schnittdarstellung entsprechend einem zweiten Ausführungsbeispiel der Erfindung;
Fig. 3 eine Brennstoffeinspritzanlage und eine Brennkraftmaschine in einer auszugsweisen, schematischen Schnittdarstellung entsprechend einem dritten Ausführungsbeispiel der Erfindung;
Fig. 4 einen Halter mit einer Lagerbuchse in einer auszugsweisen, schematischen Schnittdarstellung entsprechend einem vierten Ausführungsbeispiel der Erfindung;
Fig. 5 einen Halter mit einer Lagerbuchse in einer auszugsweisen, schematischen Schnittdarstellung entsprechend einem fünften Ausführungsbeispiel der Erfindung und
Fig. 6 einen Halter mit einer Lagerbuchse in einer auszugsweisen, schematischen Schnittdarstellung entsprechend einem sechsten Ausführungsbeispiel der Erfindung.

### Ausführungsformen der Erfindung

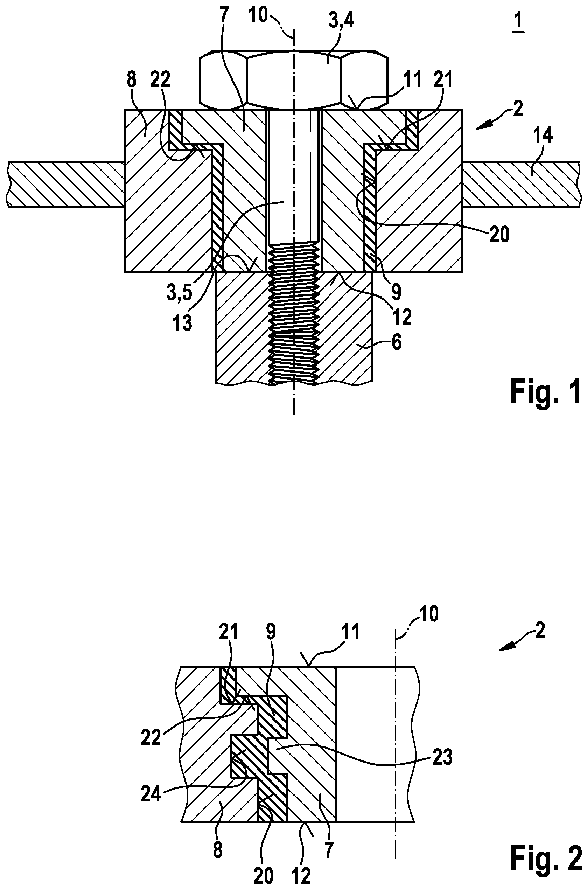

Fig. 1 zeigt einen Halter 1 mit einer Lagerbuchse 2 in einer auszugsweisen, schematischen Schnittdarstellung entsprechend einem ersten Ausführungsbeispiel der Erfindung.

Der Halter 1 weist ein Befestigungsmittel 3 auf, das in diesem Ausführungsbeispiel als Schraube 3 ausgestaltet ist. Das Befestigungsmittel 3 weist einen Kopf 4 und einen Bolzen (Schraubenbolzen) 5 auf. Mit dem Befestigungsmittel 3 wird die Lagerbuchse 2 an einer Anbaustruktur 6 befestigt. Bei der Anbaustruktur 6 handelt es sich in diesem Ausführungsbeispiel um eine Brennkraftmaschine 6, insbesondere einen Zylinderkopf 6 der Brennkraftmaschine 6.

Die Lagerbuchse 2 weist ein inneres Buchsenteil 7 und ein äußeres Buchsenteil 8 auf. Ferner weist die Lagerbuchse 2 ein elastisch verformbares Dämpfungselement 9 auf.

Die Buchsenteile 7, 8 sind jeweils aus einem metallischen Werkstoff gebildet. Hierbei können die Buchsenteile 7, 8 auch aus dem gleichen metallischen Werkstoff gebildet sein.

Das elastisch verformbare Dämpfungselement 9 ist vorzugsweise aus einem Gummi, das heißt einer Elastomerschicht, gebildet. Speziell kann das Dämpfungselement 9 aus einem synthetischen Gummi gebildet sein. Durch die Ausgestaltung aus einem Gummi kann die Schicht, die das elastisch verformbare Dämpfungselement 9 bildet, einerseits stoffschlüssig mit dem inneren Buchsenteil 7 und andererseits stoffschlüssig mit dem äußeren Buchsenteil 8 verbunden sein. Das elastisch verformbare Dämpfungselement 9 ist so zwischen dem inneren Buchsenteil 7 und dem äußeren Buchsenteil 8 angeordnet, dass es zum einen als dünne Schicht ausgestaltet ist und zum anderen nirgends ein direkter Kontakt zwischen dem inneren Buchsenteil 7 und dem äußeren Buchsenteil 8 besteht.

In diesem Ausführungsbeispiel ist das innere Buchsenteil 7 entlang einer Längsachse 10 der Lagerbuchse 2 innerhalb des äußeren Buchsenteils 8 angeordnet. Je nach Ausgestaltung ist es auch denkbar, dass das innere Buchsenteil 7 entlang der Längsachse 10 auf einer oder beiden Seiten aus dem äußeren Buchsenteil 8 heraussteht.

Das zwischen den Buchsenteilen 7, 8 angeordnete elastisch verformbare

Dämpfungselement 9 wird bei der Montage des Halters 1 an die Anbaustruktur 6 mit keiner Vorspannung beaufschlagt, denn der Kopf 4 der Schraube 3 stützt sich vollständig an einer Oberseite 11 des inneren Buchsenteils 7 ab, wobei sich das innere Buchsenteil 7 wiederum mit seiner Unterseite 12 an einer Anlagefläche 13 der Anbaustruktur 6 abstützt. Somit vereinfacht sich auch eine Montage, da Abweichungen des Ist-Drehmoments der Schraube 3 von einem Soll-Drehmoment keine Auswirkung auf das Dämpfungselement 9 haben.

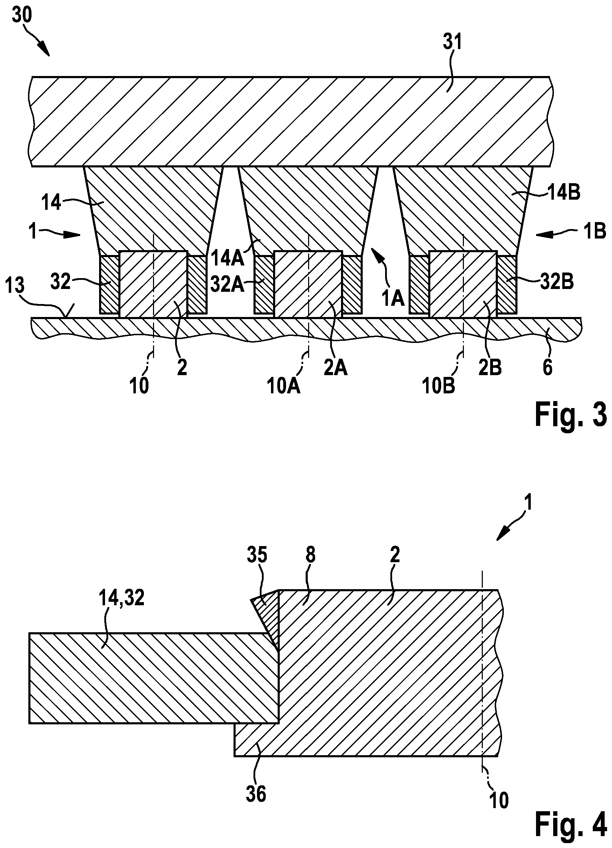

Der Halter 1 weist einen auszugsweise dargestellten Haltekörper 14 auf. Die Lagerbuchse 2 ist auf geeignete Weise mit dem Haltekörper 14 verbunden. Mögliche Ausgestaltungen für die Verbindung der Lagerbuchse 2 mit dem Haltekörper 14 sind anhand der Fig. 3 bis 6 beschrieben.

Das äußere Buchsenteil 8 weist eine durchgehende Ausnehmung 20 auf. Die durchgehende Ausnehmung 20 kann insbesondere als Stufenbohrung 20 ausgestaltet sein. Das äußere Buchsenteil 8 weist an der durchgehenden Ausnehmung 20 einen Absatz 21 auf. Das innere Buchsenteil 7 weist an der durchgehenden Ausnehmung 20 einen Absatz 22 auf. Der Absatz 22 des inneren Buchsenteils 7 ist dem Absatz 21 des äußeren Buchsenteils 8 zugeordnet. Bei der Herstellung der Lagerbuchse 2 werden die Buchsenteile 7, 8 zueinander positioniert, wobei an der durchgehenden Ausnehmung 20 ein Spalt zwischen den beiden Buchsenteilen 7, 8 verbleibt. Dieser Spalt wird mit dem Werkstoff für das Dämpfungselement 9, insbesondere dem Gummi, aufgefüllt. Insbesondere ist ein Einspritzen des Werkstoffs in den Spalt möglich. Das Dämpfungselement 9 befindet sich dann insbesondere zwischen den Absätzen 21, 22, so dass sich das innere Buchsenteil 7 mit seinem Absatz 22 über das Dämpfungselement 9 an dem Absatz 21 des äußeren Buchsenteils 8 abstützt. Im Betrieb auftretende Relativbewegungen zwischen dem äußeren Buchsenteil 8 und dem inneren Buchsenteil 7 sind durch die Zusammenwirkung an den Absätzen 21, 22 wirksam begrenzt. Da das Dämpfungselement 9 vorzugsweise stoffschlüssig mit den Buchsenteilen 7, 8 verbunden ist, ergibt sich eine wirksame Begrenzung einer Relativbewegung zwischen den Buchsenteilen 7, 8. Bei der Ausgestaltung des Dämpfungselements 9 aus einem Gummi kann das Dämpfungselement durch Vulkanisieren mit dem inneren Buchsenteil 7 sowie durch Vulkanisieren mit dem äußeren Buchsenteil 8 verbunden sein.

Fig. 2 zeigt eine Lagerbuchse 2 in einer auszugsweisen, schematischen Schnittdarstellung entsprechend einem zweiten Ausführungsbeispiel. In diesem Ausführungsbeispiel weisen das innere Buchsenteil 7 und das äußere Buchsenteil 8 an der durchgehenden Ausnehmung 20 aneinander angepasste Stützkonturen 23, 24 auf. Die Stützkontur 24 des äußeren Buchsenteils 8 ist in diesem Ausführungsbeispiel als Nut 24 ausgestaltet. Die Stützkontur 23 des inneren Buchsenteils 7 ist als eine der Nut 24 zugeordnete Rippe 23 ausgestaltet. Hierdurch wird eine entsprechende Ausformung der Schicht 9 vorgegeben, die das elastisch verformbare Dämpfungselement 9 bildet. Die Aufnahme von mechanischen Lasten wird hierdurch verbessert. Somit ergibt sich ein verbesserter Zusammenhalt der Bestandteile der Lagerbuchse 2. Die Stützkonturen 23, 24 sind vorzugsweise symmetrisch bezüglich der Längsachse 10 ausgestaltet.

Die Stützkontur 23 kann auch als Lamelle ausgestaltet sein. Ferner können die Stützkonturen 23, 24 auch als Absätze ausgestaltet sein.

Fig. 3 zeigt eine Brennstoffeinspritzanlage 30 mit einem Brennstoffverteiler 31 und Haltern 1, 1A, 1B in einer auszugsweisen, schematischen Schnittdarstellung entsprechend einem dritten Ausführungsbeispiel. Die Brennstoffeinspritzanlage 30 ist hierbei an einer Brennkraftmaschine 6 befestigt. Die Befestigung wird hierbei über die Halter 1, 1A, 1B gewährleistet. Die Halter 1, 1A, 1B weisen Haltekörper 14, 14A, 14B auf, an denen jeweils ein Halteabschnitt 32, 32A, 32B ausgestaltet ist. Die Halter 1, 1A, 1B weisen außerdem Lagerbuchsen 2, 2A, 2B auf. In diesem Ausführungsbeispiel sind die Längsachsen 10, 10A, 10B der Lagerbuchsen 2, 2A, 2B parallel zueinander und jeweils senkrecht zu der Anlagefläche 13 der Brennkraftmaschine 6 orientiert. Die Befestigung erfolgt über Befestigungsmittel 3 (Fig. 1), die zur Vereinfachung der Darstellung in der Fig. 3 nicht gezeigt sind.

Entsprechend der anhand der Fig. 3 veranschaulichten Befestigung können auch andere Komponenten 31 als ein Brennstoffverteiler 31 mit der Brennkraftmaschine 6 oder einer anderen Anbaustruktur 6 verbunden werden. Hierbei können ein oder mehrere Halter 1, 1A, 1B zum Einsatz kommen. Je nach Ausgestaltung der Anbaustruktur 6 können die Längsachsen 10, 10A, 10B auch auf andere Weise zueinander angeordnet sein.

Die Lagerbuchsen 2, 2A, 2B sind in den jeweiligen Halteabschnitt 32, 32A, 32B der Haltekörper 14, 14A, 14B eingepresst. Hierbei ist über die Einpresstiefe ein Toleranzausgleich bezüglich der Anlagefläche 13 möglich. Hierdurch können die unterschiedlichen Abstände der Halteabschnitte 32, 32A, 32B zur Anlagefläche 13 ausgeglichen werden. Hierdurch ist eine Herstellung mit größeren Toleranzen möglich.

Fig. 4 zeigt einen Halter 1 mit einer Lagerbuchse 2 in einer auszugsweisen, schematischen Schnittdarstellung. Die Lagerbuchse 2 kann hierbei beispielsweise entsprechend dem anhand der Fig. 1 beschriebenen ersten Ausführungsbeispiel oder dem anhand der Fig. 2 beschriebenen zweiten Ausführungsbeispiel ausgestaltet sein. Zur Vereinfachung der Darstellung ist die Lagerbuchse 2 in der Fig. 4 nur schematisch dargestellt. Die Lagerbuchse 2 ist mit dem Halteabschnitt 32 des Haltekörpers 14 verbunden. Hierbei kann die Lagerbuchse 2 in den Halteabschnitt 32 eingepresst sein. Dadurch ist das äußere Buchsenteil 8 der Lagerbuchse 2 durch Einpressen mit dem Halteabschnitt 32 verbunden. Ferner ist in diesem Ausführungsbeispiel ein Stemmelement 35 vorgesehen. Das Stemmelement 35 kann als segment- oder ringförmiges Stemmelement ausgestaltet sein. Das Stemmelement 35 wird an einer Fügestelle zwischen das äußere Buchsenteil 8 der Lagerbuchse 2 und den Halteabschnitt 32 eingefügt. Hierdurch ist das äußere Buchsenteil 8 der Lagerbuchse 2 mit dem Haltekörper 14 verstemmt. Bei dieser Ausgestaltung kann das Einpressen der Lagerbuchse 2 in den Haltekörper 14 gegebenenfalls auch entfallen.

In vorteilhafter Weise weist das äußere Buchsenteil 8 einen äußeren ringförmigen Absatz 36 auf, an dem sich der Halteabschnitt 32 beim Verstemmen abstützt.

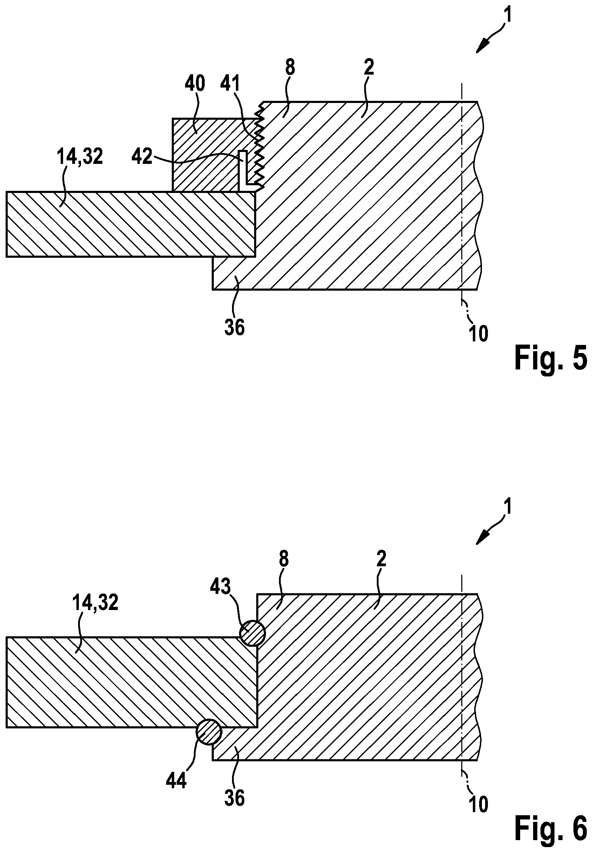

Fig. 5 zeigt den in Fig. 4 dargestellten Halter 1 mit einer Lagerbuchse 2 entsprechend einem fünften Ausführungsbeispiel. In diesem Ausführungsbeispiel ist ein Schraubelement 40 vorgesehen. Das Schraubelement 40 ist als ringförmiges Schraubelement 40 ausgestaltet. Insbesondere kann das Schraubelement 40 als Mutter (Schraubmutter) ausgestaltet sein. Das äußere Buchsenteil 8 der Lagerbuchse 2 weist ein Außengewinde 41 auf, auf das das Schraubelement 40 aufgeschraubt ist. Der Halteabschnitt 32 stützt sich einerseits an einem ringförmigen Absatz 36 ab. Andererseits wird der Halteabschnitt 32 von dem Schraubelement 40 beaufschlagt. Hierdurch ist das äußere Buchsenteil 8 der Lagerbuchse 2 mit dem Haltekörper 14 durch ein Schraubelement 40 verbunden. Das Schraubelement 40 weist vorzugsweise einen Einstich 42 in Form einer ringförmigen Nut 42 auf. Durch den Einstich 42 kann die effektive Klemmlänge des Schraubelements 40 erhöht werden.

Fig. 6 zeigt den in Fig. 4 dargestellten Halter 1 mit einer Lagerbuchse 2 entsprechend einem sechsten Ausführungsbeispiel. In diesem Ausführungsbeispiel ist das äußere Buchsenteil 8 der Lagerbuchse 2 mit dem Haltekörper 14 durch Laserschweißen verschweißt. Hierbei stützt sich der Haltekörper 14 einerseits an dem ringförmigen Absatz 36 des äußeren Buchsenteils 8 ab. Durch Laserschweißen können ein oder mehrere Schweißnähte 43, 44 erzeugt werden. Die Schweißnähte 43, 44 können sich in einer Umfangsrichtung um die Längsachse 10 erstrecken. Dadurch können ringförmige Schweißnähte 43, 44 ausgestaltet werden. Allerdings sind auch andere Ausgestaltungen denkbar. Insbesondere können durch Laserschweißen auch eine Vielzahl von Schweißpunkten 43, 44 erzeugt werden.

Die Erfindung wird durch die beigefügten Ansprüche definiert.

## Patentansprüche

1. Brennstoffeinspritzanlage (30) mit einem Brennstoffverteiler (31) und zumindest einem Halter (1, 1A, 1B), der zum Befestigen des Brennstoffverteilers (31) an einer Brennkraftmaschine (6) dient, wobei der Halter (1, 1A, 1B) einen Haltekörper (14) und zumindest einer Lagerbuchse (2) aufweist, und wobei die Lagerbuchse (2) mit dem Haltekörper (14) verbunden ist und wobei die Lagerbuchse (2) durch ein Befestigungsmittel (3), das sich durch das innere Buchsenteil (7) der Lagerbuchse (2) erstreckt, mit der Brennkraftmaschine (6) verbindbar ist,
**dadurch gekennzeichnet,**
**dass** die Lagerbuchse (2) mit einem inneren Buchsenteil (7), das zumindest im Wesentlichen aus einem metallischen Werkstoff gebildet ist, einem äußeren Buchsenteil (8), das zumindest im Wesentlichen aus einem metallischen Werkstoff gebildet ist, und einem elastisch verformbaren Dämpfungselement (9) ausgebildet ist, wobei das äußere Buchsenteil (8) eine durchgehende Ausnehmung (20) aufweist, wobei das innere Buchsenteil (7) zumindest abschnittsweise innerhalb der durchgehenden Ausnehmung (20) angeordnet ist und wobei das Dämpfungselement (9) zwischen dem inneren Buchsenteil (7) und dem äußeren Buchsenteil (8) angeordnet ist und wobei
das äußere Buchsenteil (8) an der durchgehenden Ausnehmung (20) einen Absatz (21) aufweist und das innere Buchsenteil (7) an der durchgehenden Ausnehmung (20) einen Absatz (22) aufweist, der dem Absatz (21) des äußeren Buchsenteils (8) zugeordnet ist, und dass das innere Buchsenteil (7) an dem Absatz (22) des inneren Buchsenteils (7) über das Dämpfungselement (9) an dem Absatz (21) des äußeren Buchsenteils (8) abgestützt ist.

2. Brennstoffeinspritzanlage nach Anspruch 1,
**dadurch gekennzeichnet,**
**dass** das Dämpfungselement (9) stoffschlüssig mit dem inneren Buchsenteil (7) verbunden ist und/oder dass das Dämpfungselement (9) stoffschlüssig mit dem äußeren Buchsenteil (8) verbunden ist.

3. Brennstoffeinspritzanlage nach Anspruch 1 oder 2,
**dadurch gekennzeichnet,**
**dass** das Dämpfungselement (9) durch Vulkanisieren mit dem inneren Buchsenteil (7) verbunden ist und/oder dass das Dämpfungselement (9) durch Vulkanisieren mit dem äußeren Buchsenteil (8) verbunden ist.

4. Brennstoffeinspritzanlage nach einem der Ansprüche 1 bis 3,
**dadurch gekennzeichnet,**
**dass** das Dämpfungselement (9) auf der Basis zumindest eines Elastomers und/oder eines Gummis ausgebildet ist.

5. Brennstoffeinspritzanlage nach einem der Ansprüche 1 bis 4,
**dadurch gekennzeichnet,**
**dass** das innere Buchsenteil (7) und das äußere Buchsenteil (8) an der durchgehenden Ausnehmung (20) aneinander angepasste Stützkonturen (23, 24) aufweisen.

6. Brennstoffeinspritzanlage nach Anspruch 5,
**dadurch gekennzeichnet,**
**dass** die aneinander angepassten Stützkonturen (23, 24) eine Nut (24) und eine der Nut (24) zugeordnete Rippe (23) oder Lamelle (23) aufweisen.

7. Brennstoffeinspritzanlage nach Anspruch 1,
**dadurch gekennzeichnet,**
**dass** das äußere Buchsenteil (8) der Lagerbuchse (2) in den Haltekörper (14) eingepresst ist.

8. Brennstoffeinspritzanlage nach Anspruch 1 oder 7,
**dadurch gekennzeichnet,**
**dass** das äußere Buchsenteil (8) der Lagerbuchse (2) mit dem Haltekörper (14) verstemmt ist.

9. Brennstoffeinspritzanlage nach Anspruch 1,
**dadurch gekennzeichnet,**
**dass** das äußere Buchsenteil (8) der Lagerbuchse (2) mit dem Halterkörper (14) durch ein Schraubelement (40) verbunden ist.

10. Brennstoffeinspritzanlage nach Anspruch 1 oder 7,
**dadurch gekennzeichnet,**
**dass** das äußere Buchsenteil (8) der Lagerbuchse (2) mit dem Haltekörper (14) durch Laserschweißen verschweißt ist.

## Claims

1. Fuel injection system (30) with a fuel distributor (31) and at least one holder (1, 1A, 1B) which serves for fastening the fuel distributor (31) to an internal combustion engine (6), wherein the holder (1, 1A, 1B) has a holding body (14) and at least one bearing bushing (2), and wherein the bearing bushing (2) is connected to the holding body (14), and wherein the bearing bushing (2) is connectable to the internal combustion engine (6) by a fastening means (3) which extends through the inner bushing part (7) of the bearing bushing (2), **characterized in that** the bearing bushing (2) is designed with an inner bushing part (7), which is at least substantially formed from a metallic material, an outer bushing part (8), which is at least substantially formed from a metallic material, and with an elastically deformable damping element (9), wherein the outer bushing part (8) has a continuous recess (20), wherein the inner bushing part (7) is arranged at least in sections within the continuous recess (20), and wherein the damping element (9) is arranged between the inner bushing part (7) and the outer bushing part (8), and wherein the outer bushing part (8) has a shoulder (21) on the continuous recess (20), and the inner bushing part (7) has a shoulder (22) on the continuous recess (20), said shoulder (22) being associated with the shoulder (21) of the outer bushing part (8), and **in that** the inner bushing part (7) is supported at the shoulder (22) of the inner bushing part (7) on the shoulder (21) of the outer bushing part (8) via the damping element (9).

2. Fuel injection system according to Claim 1, **characterized in that** the damping element (9) is connected to the inner bushing part (7) in an integrally bonded manner, and/or **in that** the damping element (9) is connected to the outer bushing part (8) in an integrally bonded manner.

3. Fuel injection system according to Claim 1 or 2, **characterized in that** the damping element (9) is connected to the inner bushing part (7) by vulcanization, and/or **in that** the damping element (9) is connected to the outer bushing part (8) by vulcanization.

4. Fuel injection system according to one of Claims 1 to 3, **characterized in that** the damping element (9) is formed on the basis of at least one elastomer and/or a rubber.

5. Fuel injection system according to one of Claims 1 to 4, **characterized in that** the inner bushing part (7) and the outer bushing part (8) have supporting contours (23, 24) which are matched to each other at the continuous recess (20).

6. Fuel injection system according to Claim 5, **characterized in that** the supporting contours (23, 24) which are matched to each other have a groove (24) and a rib (23) or fin (23) assigned to the groove (24).

7. Fuel injection system according to Claim 1, **characterized in that** the outer bushing part (8) of the bearing bushing (2) is pressed into the holding body (14).

8. Fuel injection system according to Claim 1 or 7, **characterized in that** the outer bushing part (8) of the bearing bushing (2) is caulked to the holding body (14).

9. Fuel injection system according to Claim 1, **characterized in that** the outer bushing part (8) of the bearing bushing (2) is connected to the holding body (14) by a screw element (40).

10. Fuel injection system according to Claim 1 or 7, **characterized in that** the outer bushing part (8) of the bearing bushing (2) is welded to the holding body (14) by laser welding.

## Revendications

1. Système d'injection de carburant (30) comprenant un distributeur de carburant (31) et au moins un support de fixation (1, 1A, 1B) qui sert à la fixation du distributeur de carburant (31) sur un moteur à combustion interne (6), le support de fixation (1, 1A, 1B) présentant un corps de retenue (14) et au moins une douille palier (2), et la douille palier (2) étant connectée au corps de retenue (14) et la douille palier (2) pouvant être connectée au moteur à combustion interne (6) par un moyen de fixation (3) qui s'étend à travers la partie de douille intérieure (7) de la douille palier (2),
**caractérisé en ce que**
la douille palier (2) est réalisée avec une partie de douille intérieure (7) qui est formée au moins essentiellement d'un matériau métallique, une partie de douille extérieure (8) qui est formée au moins essentiellement d'un matériau métallique, et un élément d'amortissement déformable élastiquement (9), la partie de douille extérieure (8) présentant un évidement continu (20), la partie de douille intérieure (7) étant disposée au moins en partie à l'intérieur de l'évidement continu (20) et l'élément d'amortissement (9) étant disposé entre la partie de douille intérieure (7) et la partie de douille extérieure (8) et la partie de douille extérieure (8) présentant au niveau de l'évidement continu (20) un épaulement (21) et la partie de douille intérieure (7) présentant au niveau de l'évidement continu (20) un épaulement (22) qui est associé à l'épaulement (21) de la partie de douille extérieure (8), et **en ce que** la partie de douille intérieure (7) est supportée au niveau de l'épaulement (22) de la partie de douille intérieure (7) par le biais de l'élément d'amortissement (9) sur l'épaulement (21) de la partie de douille extérieure (8).

2. Système d'injection de carburant selon la revendication 1,
**caractérisé en ce que**
l'élément d'amortissement (9) est connecté par liaison de matière à la partie de douille intérieure (7) et/ou l'élément d'amortissement (9) est connecté par liaison de matière à la partie de douille extérieure (8).

3. Système d'injection de carburant selon la revendication 1 ou 2,
**caractérisé en ce que**
l'élément d'amortissement (9) est connecté par vulcanisation à la partie de douille intérieure (7) et/ou **en ce que** l'élément d'amortissement (9) est connecté par vulcanisation à la partie de douille extérieure (8).

4. Système d'injection de carburant selon l'une quelconque des revendications 1 à 3,
**caractérisé en ce que**
l'élément d'amortissement (9) est réalisé à base d'au moins un élastomère et/ou d'un caoutchouc.

5. Système d'injection de carburant selon l'une quelconque des revendications 1 à 4, **caractérisé en ce que** la partie de douille intérieure (7) et la partie de douille extérieure (8) présentent au niveau de l'évidement continu (20) des contours de support adaptés l'un à l'autre (23, 24).

6. Système d'injection de carburant selon la revendication 5,
**caractérisé en ce que**
les contours de support adaptés l'un à l'autre (23, 24) présentent une rainure (24) et une nervure (23) ou une lamelle (23) associée à la rainure (24).

7. Système d'injection de carburant selon la revendication 1,
**caractérisé en ce que**
la partie de douille extérieure (8) de la douille palier (2) est pressée dans le corps de retenue (14) .

8. Système d'injection de carburant selon la revendication 1 ou 7,
**caractérisé en ce que**
la partie de douille extérieure (8) de la douille palier (2) est fixée par matage au corps de retenue (14).

9. Système d'injection de carburant selon la revendication 1,
**caractérisé en ce que**
la partie de douille extérieure (8) de la douille palier (2) est connectée au corps de retenue (14) par un élément de vis (40).

10. Système d'injection de carburant selon la revendication 1 ou 7,
**caractérisé en ce que**
la partie de douille extérieure (8) de la douille palier (2) est soudée au corps de retenue (14) par soudage au laser.
